# EUROPÄISCHE PATENTSCHRIFT

(11) **EP 2 636 544 B1**
(45) Veröffentlichungstag und Bekanntmachung des Hinweises auf die Patenterteilung: **17.12.2014**
(21) Anmeldenummer: 13152649.3
(22) Anmeldetag: 25.01.2013
(51) Int. Cl.: B60C 11/04, B60C 11/13, B60C 11/03

(54) **Fahrzeugluftreifen**
Pneumatic tyres for a vehicle
Pneus de véhicule

(30) Priorität: 05.03.2012 DE 102012101817
(43) Veröffentlichungstag der Anmeldung: 11.09.2013
(73) Patentinhaber: Continental Reifen Deutschland GmbH, 30165 Hannover (DE)
(72) Erfinder: Behr, Ulrich, 30169 Hannover (DE)
(74) Vertreter: Finger, Karsten

(56) Entgegenhaltungen:
- EP-A1- 1 637 356
- JP-A- 2007 302 112
- US-A1- 2011 005 653

## Beschreibung

Die Erfindung betrifft ein Laufstreifenprofil eines Fahrzeugluftreifens mit Profilbändern, welche durch Umfangsrillen voneinander getrennt und in radialer Richtung R nach außen durch eine die Straßenkontaktoberfläche bildende radial äußere Oberfläche begrenzt sind, wobei in wenigstens einem Profilband der in axialer Richtung A des Reifens gemessenen Breite b Rillen ausgebildet sind, welche sich ausgehend von einer das Profilband begrenzenden Umfangsrille bis in einen von der Umfangsrille in axialer Richtung A gemessenen Abstand a mit a < b - insbesondere geradlinig - erstrecken und dort enden, wobei die Rillen jeweils längs ihrer Erstreckung mit einer gemessenen Breite d₂ - insbesondere mit 1mm ≤ d₂ ≤3mm - und mit einer Tiefe t₂ ausgebildet sind und wobei die Rillen jeweils ausgehend von der Umfangsrille bis zu ihrem Erstreckungsende in ihrer Haupterstreckungsrichtung mit einer größeren Richtungskomponente in axialer Richtung A als in Umfangsrichtung U ausgebildet sind.

Derartige Laufstreifenprofile von Fahrzeugluftreifen sind z.B. aus den Dokumenten EP-A1-1637356 und US 2011/0005653 bekannt. Es ist dabei bekannt, Profilbänder als Profilblockreihen aus in Umfangsrichtung hintereinander angeordneten und durch Querrillen voneinander getrennten Profilblockelementen auszubilden, wobei sich die Querrillen ausgehend von der einen die Profilblockreihe begrenzenden Umfangsrille über den gesamten axialen Erstreckungsbereich der Profilblockreihe bis zur anderen die Profilblockreihe begrenzenden Umfangsrille erstrecken. Die Querrillen ermöglichen dabei die Wasseraufnahme und bieten Griffkanten zum verbesserten Griff auf nasser Oberfläche. Ebenso ist es bekannt, Profilbänder als über den gesamten Umfang erstreckte Umfangsrippen auszubilden, bei denen zur verbesserten Wasseraufnahme Querrillen ausgebildet sind, welche sich ausgehend von der einen die Umfangsrippe begrenzenden Umfangsrille bis in einen axialen Abstand von dieser Umfangsrille, der kleiner ist als die Breite der Profilrippe, in die Profilrippe hinein erstrecken und dort enden. Auch hier ermöglichen die Querrillen eine Wasseraufnahme und bilden zusätzlich Griffkanten zum Griff auf nasser Oberfläche.

Dabei ist es zur Optimierung des gleichförmigen Abriebs wünschenswert, die durch die Querrillen gebildeten Griffkanten in der radial äußeren Oberfläche möglichst achsparallel zur Reifenachse auszubilden. Hierdurch wird unter Nutzung der Griffkanten ein optimiertes Abriebbild möglich. Diese zur Optimierung des Abriebbildes achsparallele Ausrichtung der Griffkanten führt jedoch beim Durchlaufen des Reifenlatsches beim Fahren zu einem nahezu gleichzeitigen Aufschlagen der gesamten Griffkante längs ihrer Erstreckung auf die Straßenoberfläche und zu einem nahezu gleichzeitigen Austritt der gesamten Griffkante aus der Reifenoberfläche. Diese Effekte führen zu einer erhöhten Geräuschbildung.

Es ist bekannt zur Geräuschoptimierung die im Profilreich gebildeten Kanten möglichst in Umfangsrichtung auszurichten. Eine derartige umfangsorientierte Ausrichtung aller Rillen im Reifen reduziert jedoch besonders bei breiten Profilbändern die Aufnahmefähigkeit zur Aufnahme von Wasser.

Darüber hinaus ist es bekannt, Profilbänder mit Rillen auszubilden, die schräg zur Umfangsrichtung verlaufen und sich durch das Umfangsband hindurch erstrecken. Derartige Schrägrillen werden dabei entweder mit nur kleinem Neigungswinkel zur axialen Richtung ausgerichtet, um auf diese Weise neben der verbesserten Wasseraufnahme ein gutes Abriebverhalten zu ermöglichen jedoch unter Inkaufnahme des negativen Einflusses auf das Geräuschbild. Daneben ist es bekannt, die Schrägrillen unter Einschluss eines kleinen Neigungswinkels zur Umfangsrichtung auszurichten. Bei derartigen Ausbildungen kann zwar das Geräuschbild verbessert werden. Allerdings schließen derartige Schrägrillen üblicher Weise einen kleinen Winkel mit den Umfangsrillen ein, wodurch spitze Profilblockecken gebildet werden, die sich negativ auf das Abriebbild auswirken. Die Rillen weisen weiterhin üblicherweise über ihre Erstreckung im Wesentlichen die gleiche Tiefe auf, wodurch die Biegesteifigkeit des Profilbandes sowohl in Umfangs- als auch in Querrichtung beeinträchtigt wird, was weiterhin die Gleichmäßigkeit des Abriebs beeinträchtigen kann.

Der Erfindung liegt die Aufgabe zugrunde, mit einfachen Mitteln ein Laufstreifenprofil mit Profilbändern zu schaffen, mit welchem unter Nutzung der Vorteile von querverlaufenden Rillen verbesserte Geräuscheigenschaften bei gutem Abriebverhalten ermöglicht wird.

Die Aufgabe wird erfindungsgemäß durch die Ausbildung eines Laufstreifenprofils eines Fahrzeugluftreifens mit Profilbändern, welche durch Umfangsrillen voneinander getrennt und in radialer Richtung R nach außen durch eine die Straßenkontaktoberfläche bildende radial äußere Oberfläche begrenzt sind, wobei in wenigstens einem Profilband der in axialer Richtung A des Reifens gemessenen Breite b Rillen ausgebildet sind, welche sich ausgehend von einer das Profilband begrenzenden Umfangsrille bis in einen von der Umfangsrille in axialer Richtung A gemessenen Abstand a mit a < b - insbesondere geradlinig - erstrecken und dort enden, wobei die Rillen jeweils längs ihrer Erstreckung mit einer gemessenen Breite d₂ - insbesondere mit 1 mm ≤ d₂ ≤ 3mm - und mit einer Tiefe t₂ ausgebildet sind und wobei die Rillen jeweils ausgehend von der Umfangsrille bis zu ihrem Erstreckungsende in ihrer Haupterstreckungsrichtung mit einer größeren Richtungskomponente in axialer Richtung A als in Umfangsrichtung U ausgebildet sind, gemäß den Merkmalen von Anspruch 1 gelöst, bei dem im Erstreckungsende der Rille jeweils ein Einschnitt mündet, welcher mit einer Breite d₁ mit d₁< d₂ und mit einer Tiefe t₁ mit t₁< t₂ ausgebildet ist und sich ausgehend von der Rille über eine in Umfangsrichtung U gemessene Erstreckungslänge L erstreckt und dort im Profilband in einem von der Umfangsrille in axialer Richtung A gemessenen Abstand c mit c < b endet, wobei der Einschnitt mit seiner ausgehend von der Rille bis zu seinem Erstreckungsende in seiner Haupterstreckungsrichtung mit einer größeren Richtungskomponente in Umfangsrichtung U als in axialer Richtung A ausgebildet ist.

Durch diese Ausbildung wird ermöglicht, dass über die quer verlaufenden Rillen ausreichend Aufnahmevolumen zur Aufnahme von Wasser sicher gestellt wird und dass gleichzeitig durch die Rille und über den Einschnitt Griffkanten in Umfangs- und in Querrichtung zur Verfügung gestellt werden zur Sicherstellung eines guten Nassgriffverhalten sowohl in Umfangs- als auch in Querrichtung. Die Ausbildung der Rille mit ihrer Haupterstreckungsrichtungskomponente in Querrichtung und der in das von der Umfangsgrille wegweisende Ende der Querrille einmündende Einschnitt mit seiner Haupterstreckungsrichtungskomponente in Umfangsrichtung ermöglichen einen Schnittkantenverlauf des Gebildes aus Rille und Einschnitt, welcher über den Erstreckungsabschnitt der Rille seine Hauptrichtungskomponente in axialer Richtung und im anschließenden Erstreckungsbereich des Einschnitts seine Hauptrichtungskomponente in Umfangsrichtung aufweist. Die durch die Rille gebildete Griffkante ermöglicht die Umsetzung der Vorteile einer optimierten Abriebausbildung. Die aus Rille und Feineinschnitt gebildete Kante weist einen ausreichend umfangsgerichteten Erstreckungsabschnitt auf, welcher trotz der Abrieboptimierung die Geräuschbildung reduziert. Die Ausbildung mit dem Einschnitt, welcher mit seiner Haupterstreckungsrichtungskomponente in Umfangsrichtung ausgerichtet und mit geringer Breite und mit geringer Tiefe als die Rille ausgebildet ist, ermöglicht dabei die Aufrechterhaltung einer hohen Biegesteifigkeit des Profilbandes um Achsen, die an die Umfangsrichtung Tangenten bilden. Durch die Ausbildung der Erstreckung von Rille und Einschnitt mit a < b und c < b wird darüber hinaus auch eine hohe Biegesteifigkeit um Achsparallelen ermöglicht. Die hohe Biegesteifigkeit begünstigt ein besonders gleichmäßiges Abriebverhalten.

Besonders vorteilhaft ist die Ausbildung eines Laufstreifenprofils gemäß den Merkmalen von Anspruch 2, bei dem die Rille mit einer in radialer Richtung R gemessenen Tiefe t₂ mit 4mm ≤ t_{2≤}P_{T} ausgebildet ist, wobei P_{T} die maximale in der Umfangsrille in radialer Richtung R gemessene Profiltiefe ist. Durch diese Ausbildung wird in einfacher Weise ermöglicht, dass die Rille mit ausreichendem Volumen zur Aufnahme von Wasser ausgebildet und eine optimale Gelenkwirkung im Profilband entfalten kann.

Besonders vorteilhaft ist die Ausbildung eines Laufstreifenprofils gemäß den Merkmalen von Anspruch 3, bei dem der Einschnitt längs seiner Erstreckung mit einer in radialer Richtung R gemessenen Tiefe t₁ mit t₁≤2mm ausgebildet ist. Durch diese Ausbildung kann in einfacher Weise ermöglicht werden, dass der Einschnitt mit ausreichend geringer Tiefe ausgebildet ist, um mechanische Eigenschaften des Profilbandes - wie z.B. Biegefestigkeit und Gelenkwirkung - nicht signifikant zu beeinträchtigen, aber dennoch groß genug ist, um wirksame in Umfangsrichtung gerichtete Kanten zu erzeugen.

Besonders vorteilhaft ist die Ausbildung eines Laufstreifenprofils gemäß den Merkmalen von Anspruch 4, wobei die Rille mit ihrer Haupterstreckungsrichtung einen Neigungswinkel β mit der Umfangsrichtung U einschließt mit 82,5° ≤ β ≤97,5°. Hierdurch werden in einfacher Weise nahezu achsparallele Querkanten mit deren Vorteilen zur Verfügung gestellt.

Besonders vorteilhaft ist die Ausbildung eines Laufstreifenprofils gemäß den Merkmalen von Anspruch 5, wobei der Einschnitt mit seiner Haupterstreckungsrichtung einen Neigungswinkel α mit der Umfangsrichtung U einschließt mit 0°≤a ≤20°. Hierdurch werden in einfacher Weise nahezu Umfangsparallele Kanten mit deren Vorteilen zur Verfügung gestellt und bei Ausbildung mit 0° < α einen zusätzliche Nassgrifffördernden Schrägkanteneffekt.

Besonders vorteilhaft ist die Ausbildung eines Laufstreifenprofils gemäß den Merkmalen von Anspruch 6, bei dem der Abstand a mit (b/3) ≤a≤ (b-2mm) ausgebildet ist. Durch diese Ausbildung kann in einfacher Weise gute Querrillenwirkung bei gleichzeitiger Sicherung hoher Steifigkeit des Profilbandes umgesetzt werden.

Besonders vorteilhaft ist die Ausbildung eines Laufstreifenprofils gemäß den Merkmalen von Anspruch 7, bei dem das Profilband mit einer Breite b mit 16mm≤b≤30mm ausgebildet ist. Dies ermöglicht in einfacher Weise die Ausbildung mit einer großen Stabilität des Profilbandes.

Besonders vorteilhaft ist die Ausbildung eines Laufstreifenprofils gemäß den Merkmalen von Anspruch 8, bei dem der Abstand c mit a≤c≤(b-2mm) ausgebildet ist. Hierdurch werden in einfacher Weise sicher gestellt werden, dass die axiale Rillenerstreckung nicht über die axiale Position des Erstreckungsendes des Einschnitts hinausreicht und der Einschnitt ausreichende Umfangsorientierte Kanten ggfs. mit zusätzlichem Schrägkanteneffekt aufweist.

Besonders vorteilhaft zur Sicherstellung der geräuschmindernden Kantenwirkung des Einschnitts ist die Ausbildung eines Laufstreifenprofils gemäß den Merkmalen von Anspruch 9, bei dem die Breite d₁ mit 1mm≤d₁ ausgebildet ist. Darüber hinaus kann hierdurch die Standzeit des zur Ausformung des Einschnittes erforderlichen Negatives in der Vulkanisationsform erhöht werden.

Besonders vorteilhaft ist die Ausbildung eines Laufstreifenprofils gemäß den Merkmalen von Anspruch 10, bei dem der Einschnitt sich zu seinem von der Rille wegweisenden Erstreckungsende hin unter - insbesondere stetig - abnehmender Breite d₁ verjüngt. Hierdurch kann der Gesamtverlauf der Rille mit Einschnitt in Bezug auf die Geräuschentstehung weiter optimiert werden. Außerdem wird hierdurch die Entwässerung während des Abrollens von im Reifenlatsch unter dem Profilband befindlichem Wasser in die Querrille hinein erleichtert. Hierdurch können die Nassbremseigenschaften positiv beeinflusst werden.

Besonders vorteilhaft ist die Ausbildung eines Laufstreifenprofils gemäß den Merkmalen von Anspruch 11, bei dem die in die in Umfangsrichtung U des Reifens hintereinander angeordneten Rillen einmündenden Einschnitte jeweils ausgehend von der jeweiligen Rille in die gleiche Umfangsorientierung ausgerichtet erstrecken.

Besonders vorteilhaft ist die Ausbildung eines Laufstreifenprofils gemäß den Merkmalen von Anspruch 12, bei dem die Erstreckungslänge L des Einschnitts mit (d₂+2mm)≤L≤(3E) ausgebildet ist, wobei E den in Umfangsrichtung U gemessenen Abstand zwischen der Rille und der in Erstreckungsrichtung des Einschnitts zur Rille benachbarten Rille bildet, welcher in der radial äußeren Oberfläche von der Einmündung der Rille in die Umfangsrille bis zur Einmündung der benachbarten Rille in die Umfangsrille gemessen wird.

Besonders vorteilhaft ist die Ausbildung eines Laufstreifenprofils gemäß den Merkmalen von Anspruch 13, bei dem die Rille in Umfangsrichtung U zu beiden Seiten hin jeweils durch eine Rillenflanke begrenzt wird, welche sich in radialer Richtung aus dem Rillengrund bis zur radial äußeren Oberfläche erstreckt, wobei der Übergang zwischen derjenigen Rillenflanke, in welche der Einschnitt in die Rille mündet, zur radial äußeren Oberfläche als Fase ausgebildet ist. Hierdurch kann ein unerwünschtes Einrollen der zwischen Rillenflanke und radial äußerer Oberfläche ausgebildeten Kante verhindert werden, wodurch Trockenbremseigenschaften verbessert werden können.

Besonders vorteilhaft zur Vermeidung unerwünschter Kerbspannungen ist die Ausbildung eines Laufstreifenprofils gemäß den Merkmalen von Anspruch 14, wobei die Fase im Übergang zum Einschnitt in eine den Einschnitt begrenzende Flanke übergeht und in ihrer Verlängerung im Einschnitt die zur Umfangsrille hinweisende den Einschnitt begrenzende Flanke bildet.

Besonders vorteilhaft ist die Ausbildung eines Laufstreifenprofils gemäß den Merkmalen von Anspruch 15, wobei das Profilband in einem zwischen den in den Schulterbereichen des Reifens ausgebildeten Schulterbändern ausgebildeten mittleren axialen Erstreckungsbereich des Reifens ausgebildet ist. Gerade in diesem für Abriebs- und Geräuschperformance eines Reifens besonders relevanten Erstreckungsabschnitt ist die Ausbildung eines derartigen Profilbandes besonders wirkungsvoll.

Die Erfindung wird im Folgenden an Hand der in den Figuren 1 bis 6 dargestellten Ausführungsbeispiele näher erläutert. Hierin zeigen
- Fig. 1: eine Draufsicht auf einen Laufstreifenprofilabschnitt eines Fahrzeugluftreifen für Pkw-Fahrzeuge mit einer Umfangsrippe mit Rillen und Einschnitten,
- Fig. 2: die Umfangsrippe von Fig.1 in Schnittdarstellung gemäß Schnitt II-II von Fig.1,
- Fig. 3: die Umfangsrippe von Fig.1 in Schnittdarstellung gemäß Schnitt III-III von Fig.1,
- Fig. 4: die Umfangsrippe von Fig. in Schnittdarstellung gemäß Schnitt IV-IV von Fig.1,
- Fig. 5: die Umfangsrippe von Fig.1 in Schnittdarstellung gemäß Schnitt V-V von Fig. 1 und
- Fig. 6: den Laufstreifenprofilabschnitt von Fig. 1 mit alternativer Ausführung des Einschnitts.

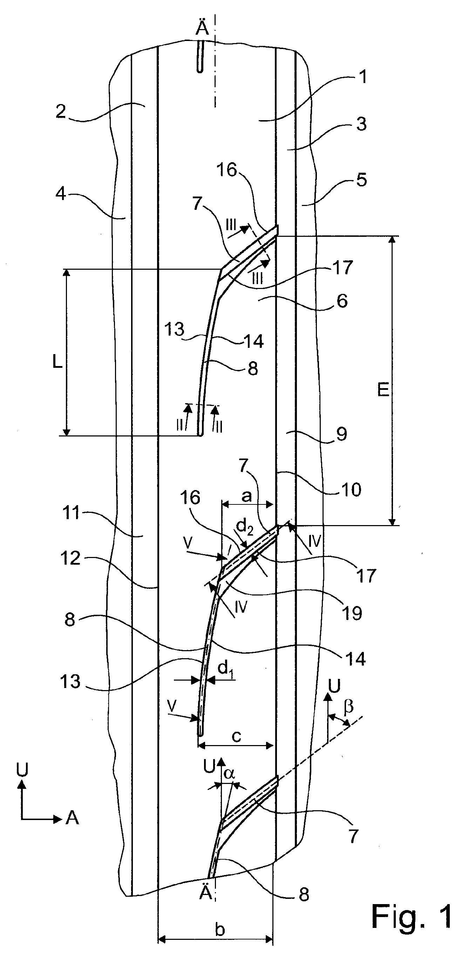

Die Figuren 1 bis 5 zeigen einen Profilabschnitt eines Laufstreifenprofils eines Pkw mit in axialer Richtung A des Fahrzeugluftreifens nebeneinander angeordneten Profilbändern 4, 1 und 5, welche jeweils über den gesamten Umfang des Fahrzeugluftreifens erstreckt ausgebildet und in Umfangsrichtung U des Fahrzeugluftreifens ausgerichtet sind. Die Profilbänder 4, 1 und 5 sind im zentralen, axialen Erstreckungsabschnitt des Laufstreifenprofils zwischen ebenfalls mit Profilbändern ausgebildeten, nicht dargestellten Reifenschultern bekannter Art ausgebildet. Die Profilbänder 4 und 5 sind entweder aus Umfangsrippen bekannter Art, welche sich über den gesamten Umfang des Fahrzeugluftreifens erstrecken und in Umfangsrichtung U ausgerichtet sind, oder in alternativer Form als Profilblockreihen bekannter Art aus in Umfangsrichtung hintereinander angeordneten und jeweils durch Querrillen voneinander getrennten Profilblockelementen ausgebildet. Das Profilband 1 ist als Umfangsrippe ausgebildet, welche in Umfangsrichtung U des Fahrzeugluftreifens ausgerichtet ist und sich über den gesamten Umfang des Fahrzeugluftreifens erstreckt. Die Umfangsrippe 1 ist in axialer Richtung A des Fahrzeugluftreifens zum Profilband 4 hin durch eine über den gesamten Umfang des Fahrzeugluftreifens erstreckte und in Umfangsrichtung U ausgerichtete Umfangsrille 2 und zum Profilband 5 hin durch eine über den gesamten Umfang des Fahrzeugluftreifens erstreckte und in Umfangsrichtung U ausgerichtete Umfangsrille 3 bekannter Art beabstandet. Die Umfangsrippe 1 ist in radialer Richtung R des Fahrzeugluftreifens nach außen hin von einer radial äußeren Oberfläche 6 begrenzt, welche beim Abrollen des Reifens die Straßenkontaktoberfläche der Umfangsrippe 1 bildet. Die Umfangsrille 3 ist in radialer Richtung R nach innen hin durch einen über den gesamten Umfang des Fahrzeugluftreifens erstreckten Rillengrund 9 bekannter Art und zur Umfangsrippe 1 hin durch eine die Rillenwand bildende Flanke 10 der Umfangsrippe 1 begrenzt. Die Flanke 10 erstreckt sich in radialer Richtung ausgehend vom Rillengrund 9 der Rille 3 bis zur radial äußeren Oberfläche 6 der Umfangsrippe 1. Die Umfangsrille 2 ist in radialer Richtung R nach innen hin durch einen über den gesamten Umfang des Fahrzeugluftreifens erstreckten Rillengrund 11 und zur Umfangsrippe 1 hin durch eine die Rillenwand bildende Flanke 12 der Umfangsrippe 1 begrenzt. Die Flanke 12 erstreckt sich in radialer Richtung R ausgehend vom Rillengrund 11 bis zur radial äußeren Oberfläche 6 der Umfangsrippe 1. Die Umfangsrippe 1 ist in der radial äußeren Oberfläche 6 mit einer in axialer Richtung A gemessenen Breite b mit 16mm ≤ b ≤ 30mm ausgebildet.

Die Umfangsrille 3 und die Umfangsrille 2 sind mit einer in radialer Richtung R gemessenen Profiltiefe P_{T} ausgebildet, welche jeweils das in radialer Richtung R gemessene maximale Maß zwischen Rillengrund 9 der Umfangsrille 3 und der radial äußeren Oberfläche 1 der Umfangsrippe 1 bzw. zwischen Rillengrund 11 der Umfangsrille 2 und der radial äußeren Oberfläche 6 der Umfangsrippe 1 bildet. Die Profiltiefe P_{T} ist beispielsweise mit P_{T}= 8,5mm ausgebildet.

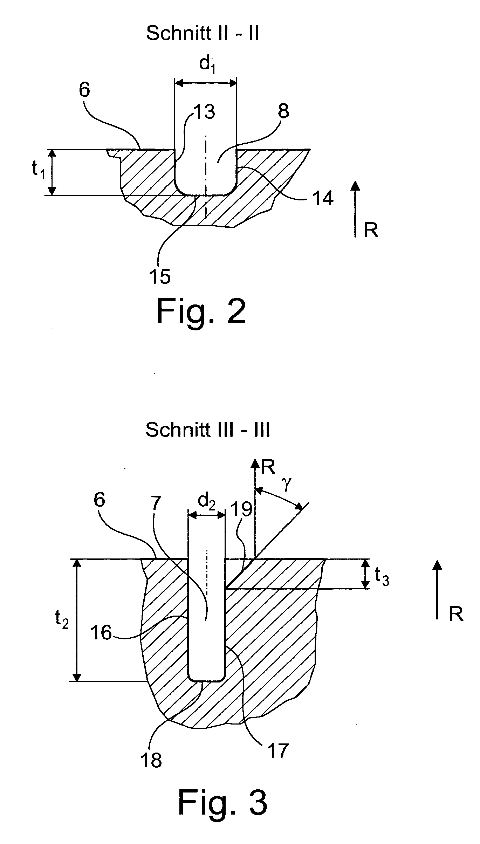

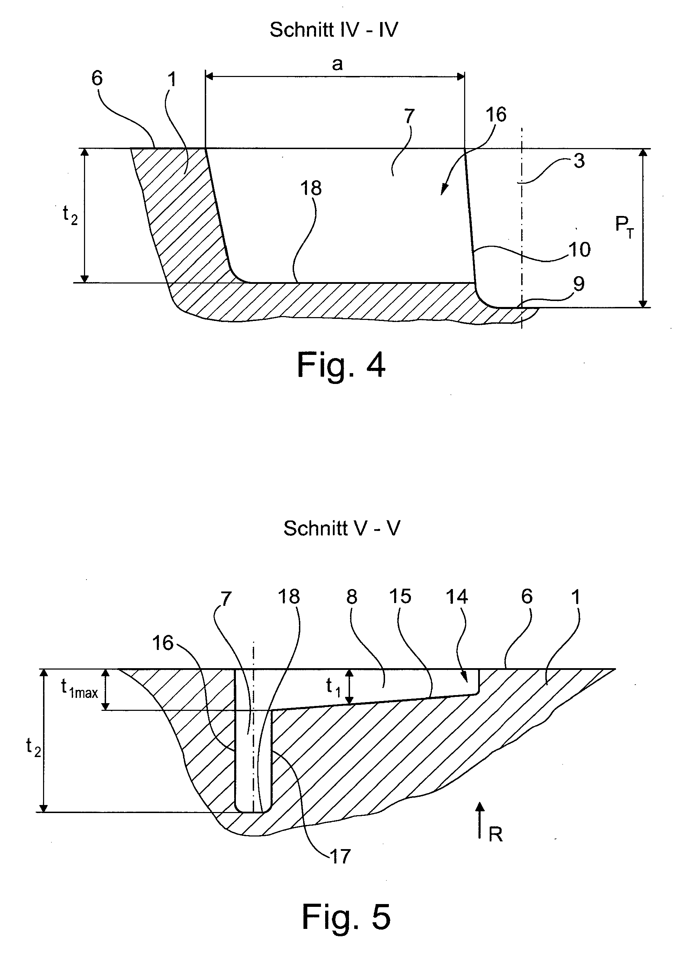

In der radial äußeren Oberfläche 6 der Umfangsrippe 1 sind über den Umfang des Fahrzeugluftreifens verteilt Rillen 7 ausgebildet, welche sich jeweils ausgehend von der die Umfangsrille 3 begrenzenden Flanke 10 unter Einschluss eines Winkels β zur Umfangsrichtung U geradlinig verlaufend bis in einen in axialer Richtung A gemessenen Abstand a mit a < b von der die Umfangsrippe 1 zur Umfangsrille 3 hin begrenzenden Flanke 10 erstreckt und dort endet. Die Rillen 7erstrecken sich mit ihrer Haupterstreckungsrichtungskomponente in axialer Richtung A. Die Rillen 7 sind - wie in den Figuren 3 und 4 zu erkennen ist - in radialer Richtung R nach innen hin durch einen über die gesamte Erstreckung der Rille 7 erstreckten Rillengrund 18 und in Umfangsrichtung U des Reifens durch die beiden vom Rillengrund 18 getrennten Flanken 16 und 17 begrenzt, welche sich jeweils ausgehend vom Rillengrund 18 nach radial außen bis zur radial äußeren Oberfläche 6 erstrecken. Die Rille 7 ist längs ihrer Erstreckung mit einer in radialer Richtung R gemessenen Rillentiefe t₂ ausgebildet, welche das in radialer Richtung R gemessene Maß zwischen der radial äußeren Oberfläche 6 und dem Rillengrund 18 bildet. Die Tiefe t₂ ist mit 4mm ≤ t₂ ≤ P_{T} ausgebildet. Die Rille 7 ist längs ihrer Erstreckung mit einer jeweils senkrecht zur Haupterstreckungsrichtung gemessenen Rillenbreite d₂ ausgebildet, welche jeweils den Abstand des Schnittes zwischen Rillenflanke 16 mit der radial äußeren Oberfläche 6 zum Schnitt der Flanke 17 mit der radial äußeren Oberfläche 6 darstellt. Die Flanken 16 und 17 sind dabei in ihren Schnittebenen senkrecht zur Erstreckungsrichtung der Rille geradlinig ausgebildet und lediglich im Übergang zum Rillengrund mit einem abgerundeten Übergang versehen. Die Breite d₂ ist mit 1mm ≤ d₂ ≤ 3mm ausgebildet.

Die Rillen 7 der Umfangsrippe 1 sind längs ihrer axialen Erstreckung ausgehend von der Flanke 10 der Umfangsrille 3 in Richtung zur Flanke 12 der benachbarten Umfangsrille 2 hin mit jeweils gleicher Umfangsorientierungsrichtung geneigt ausgebildet. Der Abstand zwischen zwei in Umfangsrichtung U benachbarten Rillen 7 - gemessen in der Schnittkante zwischen radial äußerer Oberfläche 6 und der Flanke 10 der Umfangsrille 3 - ist der Abstand E. Der Abstand E ist dabei in einem - nicht dargestellten - Ausführungsbeispiel über den Umfang des Fahrzeugluftreifens hinweg zwischen allen in Umfangsrichtung hintereinander angeordneten, benachbarten Rillen 7 jeweils gleich groß gewählt ausgebildet. In einem anderen - dargestellten - Ausführungsbeispiel ist der Abstand E über den Umfang des Fahrzeugluftreifens hinweg zwischen den einzelnen in Umfangsrichtung U jeweils hintereinander angeordneten, benachbarten Rillen der gewählten Pitchfolgenausbildung des Laufstreifenprofils entsprechend unterschiedlich groß gewählt ausgebildet.

Der Winkels β ist mit 82,5°≤β≤90°, beispielsweise mit β =85° ausgebildet.

In dem von der Rillenflanke 10 der Rille 3 im Abstand a wegweisenden Ende der Rille 7 mündet jeweils ein Einschnitt 8 in die Rille 7, welcher sich mit seiner Haupterstreckungsrichtungskomponente in Umfangsrichtung U erstreckt und dabei längs seiner Erstreckung unter Einschluss eines Winkels α zur Umfangsrichtung U erstreckt ausgebildet ist mit 0° ≤ α ≤ 20°.

Der Einschnitt 8 erstreckt sich dabei jeweils ausgehend von der Umfangsrille 7 in die gleiche Umfangsorientierungsrichtung wie die Umfangsrille 7 ausgehend von deren Einmündungsstelle in die Umfangsrille 3.

Der Einschnitt 8 ist in radialer Richtung R nach innen hin - wie in Fig. 2 zu erkennen ist - von einem Einschnittgrund 15 begrenzt. Der Einschnitt 8 ist in axialer Richtung A zur Umfangsrille 2 hin von einer die Einschnittwand bildenden Flanke 13 und zur Umfangsrille 3 hin von einer die Einschnittwand bildenden Flanke 14, wobei die Flanken 13 und 14 sich jeweils ausgehend vom Einschnittgrund 15 in radialer Richtung R nach außen bis zur radial äußeren Oberfläche 6 erstrecken. Der Einschnitt 8 ist dabei längs seiner Erstreckung mit einer Tiefe t₁ mit t₁ ≤ 2mm ausgebildet, welche den radialen Abstand zwischen der radial äußeren Oberfläche 6 und dem Rillengrund 15 bildet. Der Einschnitt 8 ist längs seiner Erstreckung mit einer senkrecht zur Erstreckungsrichtung jeweils in der radial äußeren Oberfläche 6 gemessenen Einschnittbreite d₁ mit d₁ ≤ d₂ ausgebildet. Die Flanke 13 begrenzt den Einschnitt 8 längs dessen gesamter Erstreckung bis zur Rille 7, bildet in ihrer Verlängerung durch die Rille die die Rille 7 begrenzende Endflanke und schneidet die die Rille 7 begrenzende Flanke 16 unter Bildung eines Knicks zwischen Flanke 13 und Flanke 16.

Die Flanke 14 begrenzt den Einschnitt 8 längs dessen gesamter Erstreckung bis zur Rille 7 und mündet in die die Rille 7 begrenzende Flanke 17. Deren Einschnitt 8 erstreckt sich dabei mit einer ausgehend von dem Schnitt der verlängerten Flanke 13 in die Flanke 16 der Rille 7 bis zum Erstreckungsende der Flanke 13 in Umfangsrichtung U gemessenen Erstreckungslänge L, wobei sich die Flanke 13 und somit der Einschnitt 8 über die gesamte Erstreckung des Einschnitts ausgehend von der Rille 7 bis hin zum Erstreckungsende des Einschnitts stetig in axialer Richtung A weiter von der Flanke 10 der Rille 3 entfernt und im Erstreckungsende einen maximalen Abstand c gemessen in axialer Richtung A von der Flanke 10 der Rille 3 aufweist, wobei der Abstand c mit a ≤ c ≤ (b - 2mm) gewählt ausgebildet ist.

Im dargestellten Ausführungsbeispiel ist b beispielsweise b = 25mm, c = 16mm und a = 12mm gewählt.

Die Länge L ist mit (d₂+ 2mm) ≤ L ≤ (3E) gewählt ausgebildet, wobei E den Abstand zwischen der zum Einschnitt 8 gehörigen Rille 7 und der ausgehend von der Rille 7 in Erstreckungsrichtung des Einschnitts 8 nächstliegenden, benachbarten Rille 7 gewählte Abstand E ist.

Im dargestellten Ausführungsbeispiel ist der Einschnitt 8 längs seiner Erstreckung mit einer konstanten Dicke d₁ ausgebildet, wobei die Dicken d₁ und d₂ mit 1mm ≤ d₁ ≤ d₂ ausgebildet sind.

Im dargestellten Ausführungsbeispiel ist der Einschnitt 8 ausgehend von der Rille 7 längs seiner Erstreckung bis zu seinem Erstreckungsende mit einer progressiv zunehmenden Umfangsrichtungskomponente ausgebildet, so dass der Neigungswinkel α des Einschnitts 8 zur Umfangsrichtung U ausgehend von der Einmündung des Einschnitts 8 in die Rille 7 bis zu seinem von der Rille 7 wegweisenden Erstreckungsende hin stetig kleiner wird. Der Einschnitt 8 weist auf diese Weise einen um einen von der Umfangsrippe1 in Richtung der Umfangsrille 3 wegweisend angeordneten Krümmungsmittelpunkt gekrümmten Verlauf auf.

In einem Ausführungsbeispiel ist der Einschnitt längs seiner Erstreckung mit konstanter Tiefe t₁ ausgebildet.

In dem in Fig. 5 dargestellten Ausführungsbeispiel ist der Einschnitt 8 mit einer ausgehend von dem von der Rille 7 wegweisenden Erstreckungsende des Einschnitts 8 bis zur Rille 7 hin längs seiner Erstreckung konstant zunehmenden Tiefe t₁ ausgebildet, welche ihr Maximum t_{1Max} im Bereich der Einmündung des Einschnitts 8 in die Flanke 17 der Rille 7 aufweist.

Die Flanke 17 der Rille 7 ist in einem Ausführungsbeispiel ausgehend vom Rillengrund 18 bis zur radial äußeren Oberfläche 6 hin geradlinig erstreckt ausgebildet, ebenso wie die Rillenflanke 16.

In Fig. 3 und in Fig. 1 ist ein alternatives Ausführungsbeispiel gezeigt, in dem die Rillenflanke 17 ausgehend vom Rillengrund 18 in radialer Richtung R nach außen bis in eine Position im radialen Abstand t₃ von der radial äußeren Oberfläche 6 sich in radialer Richtung R nach außen hin geradlinig erstreckt und dann in einem Übergangsbereich zwischen Flanke 17 und dann im Übergangsbereich zur radial äußeren Oberfläche 6 als Fase 19 ausgebildet ist, wobei t₃ mit t₃ ≤ 2mm ausgebildet ist.

Wie in Fig. 1 dargestellt ist, geht der in radialer Richtung R kurze Erstreckungsabschnitt der Fase 19 im Bereich der Einmündung des Einschnitts 8 in die Rille 7 unter kontinuierlicher Zunahme des Fasenwinkels γ ausgehend von einem Wert von γ = 45° zur Radialen R in die Flanke 14 des Einschnitts 8 über.

Auch an der mit Fase 19 ausgebildeten Rille 7 wird die Breite d₂ der Rille 7 zwischen dem Schnitt der Flanke 16 mit der radial äußeren Oberfläche 6 einerseits und dem Schnitt der in Richtung zur radial äußeren Oberfläche 6 über den Erstreckungsabschnitt der Fase 19 hinweg verlängerten Flanke 17 mit der radial äußeren Oberfläche 6 gemessen.

Wie in Fig. 1 dargestellt ist, verläuft schneidet die Umfangsrippe 1 die Äquatorebene Ä-Ä des Reifens.

In analoger Weise wie die Umfangsrippe 1 sind in einem nicht dargestellten Ausführungsbeispiel auch die Umfangsrippen 4 und 5, welche ebenfalls innerhalb des mittleren Erstreckungsabschnitt des Laufstreifenprofils zwischen den Schulterbereichen mit dort ausgebildeten Schulterbändern angeordnet sind, mit Rillen 7 und in diese einmündenden Einschnitten 8 ausgebildet.

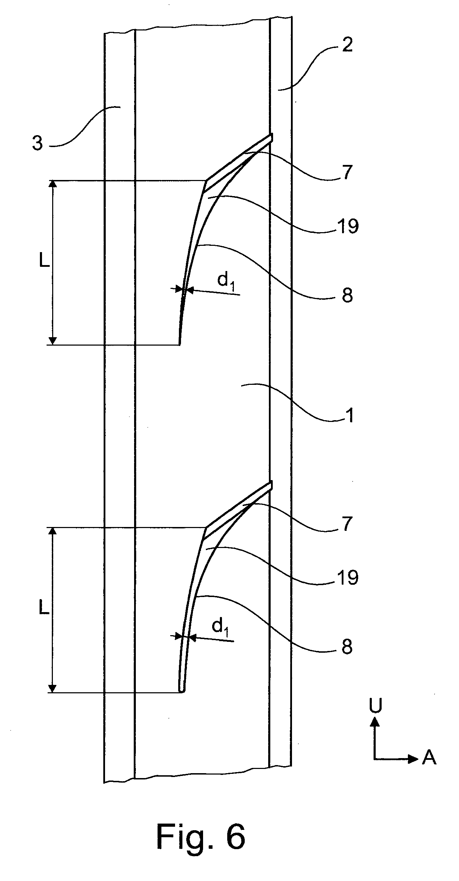

Fig. 6 zeigt ein Ausführungsbeispiel, bei welchem jeweils ein - in Fig. 6 oben dargestellter - Einschnitt 8 ausgehend von der ihm zugeordneten Rille 7 längs seiner gesamten Erstreckung über die Erstreckungslänge L mit kontinuierlich abnehmender Breite d₁ ausgebildet ist, wodurch der Einschnitt 8 bis zu seinem Erstreckungsende hin spitz zuläuft und in einer Spitze endet. In einem - nicht dargestellten - Ausführungsbeispiel sind dabei über den gesamten Umfang des Fahrzeugluftreifens erstreckt alle derartig in jeweils eine Rille mündenden Einschnitte 8 einer Umfangsrippe 1in dieser Weise ausgebildet.

In einer anderen in Fig.6 dargestellten Ausführung sind über den Umfang des Reifens hinweg in alternierender Abfolge jeweils ein in eine Rille 7 mündender Einschnitt 8 in dieser Weise spitz zulaufend und der in Umfangsrichtung U hierzu benachbarte in eine Rille 7 mündende Einschnitt 8 jeweils wie die in Fig. 1 dargestellten Einschnitte 8 mit konstanter Breite d₁ ausgebildet.

In einer nicht dargestellten Ausführung sind über den Umfang hinweg in alternierender Reihenfolge erste ausgehend von der Umfangsrille 2 erstreckte Rillen 7 mit Einschnitten 8 - wie in den Figuren 1 oder 6 dargestellt - und zweite, jeweils ausgehend von der Umfangsrille 3 erstreckte Rillen 7 mit entsprechenden Einschnitten 8, welche mit entsprechender axialer Erstreckung ausgehend von der Flanke 12 in die Umfangsrippe 1 mit den Abständen a bzw. c jedoch gemessen von der Schnittebene zwischen der Flanke 12 der Rille 2 und der radial äußeren Oberfläche 6 ausgebildet sind, angeordnet. Die zweiten Rillen 7 und die diesen zweiten Rillen 7 zugeordneten Einschnitte 8 sind hierbei zu den in Fig. 1 bzw. Fig. 6 dargestellten Ausbildungen in an der Äquatorebene Ä-Ä gespiegelter Weise ausgebildet.

### Bezugszeichenliste

### (Teil der Beschreibung)

- 1: Umfangsrippen
- 2: Umfangsrille
- 3: Umfangsrille
- 4: Umfangsrippe
- 5: Umfangsrippe
- 6: Radial äußere Oberfläche
- 7: Rille
- 8: Einschnitt
- 9: Rillengrund
- 10: Flanke
- 11: Rillengrund
- 12: Flanke
- 13: Flanke
- 14: Flanke
- 15: Einschnittsgrund
- 16: Flanke
- 17: Flanke
- 18: Rillengrund
- 19: Fase

## Patentansprüche

1. Laufstreifenprofil eines Fahrzeugluftreifens mit Profilbändern(4,1,5), welche durch Umfangsrillen (2,3) voneinander getrennt und in radialer Richtung R nach außen durch eine die Straßenkontaktoberfläche bildende radial äußere Oberfläche (6) begrenzt sind, wobei in wenigstens einem Profilband (1) der in axialer Richtung A des Reifens gemessenen Breite b Rillen (7) ausgebildet sind, welche sich ausgehend von einer das Profilband (1) begrenzenden Umfangsrille (3) bis in einen von der Umfangsrille (3) in axialer Richtung A gemessenen Abstand a mit a < b - insbesondere geradlinig - erstrecken und dort enden, wobei die Rillen (7) jeweils längs ihrer Erstreckung mit einer gemessenen Breite d₂ - insbesondere mit 1mm ≤ d₂ ≤ 3mm - und mit einer Tiefe t₂ ausgebildet sind und wobei die Rillen (7) jeweils ausgehend von der Umfangsrille (3) bis zu ihrem Erstreckungsende in ihrer Haupterstreckungsrichtung mit einer größeren Richtungskomponente in axialer Richtung A als in Umfangsrichtung U ausgebildet ist,
**dadurch gekennzeichnet,**
**dass** im Erstreckungsende der Rille (7) jeweils ein Einschnitt (8) mündet, welcher mit einer Breite d₁ mit d₁< d₂ und mit einer Tiefe t₁ mit t₁< t₂ ausgebildet ist und sich ausgehend von der Rille (7) über eine in Umfangsrichtung U gemessene Erstreckungslänge L erstreckt und dort im Profilband (1) in einem von der Umfangsrille (2,3) in axialer Richtung A gemessenen Abstand c mit c < b endet, wobei der Einschnitt (8) mit seiner ausgehend von der Rille (7) bis zu seinem Erstreckungsende in seiner Haupterstreckungsrichtung mit einer größeren Richtungskomponente in Umfangsrichtung U als in axialer Richtung A ausgebildet sind.

2. Laufstreifenprofil gemäß den Merkmalen von Anspruch 1,
bei dem die Rille (7) mit einer in radialer Richtung R gemessenen Tiefe t₂ mit 4mm≤ t₂ ≤ P_{T} ausgebildet ist, wobei P_{T} die maximale in der Umfangsrille (3) in radialer Richtung R gemessene Profiltiefe ist.

3. Laufstreifenprofil gemäß den Merkmalen von Anspruch 1 oder 2,
bei dem der Einschnitt (8) längs seiner Erstreckung mit einer in radialer Richtung R gemessenen Tiefe t₁ mit t≤2mm ausgebildet ist.

4. Laufstreifenprofil gemäß den Merkmalen von einem oder mehreren der vorangegangenen Ansprüche,
wobei die Rille (7) mit ihrer Haupterstreckungsrichtung einen Neigungswinkel β mit der Umfangsrichtung U einschließt mit 82,5°≤ β ≤97,5°.

5. Laufstreifenprofil gemäß den Merkmalen von einem oder mehreren der vorangegangenen Ansprüche,
wobei der Einschnitt (8) mit seiner Haupterstreckungsrichtung einen Neigungswinkel α mit der Umfangsrichtung U einschließt mit 0°≤ a ≤20°.

6. Laufstreifenprofil gemäß den Merkmalen von einem oder mehreren der vorangegangenen Ansprüche,
bei dem der Abstand a mit (b/3) ≤a≤(b-2mm) ausgebildet ist.

7. Laufstreifenprofil gemäß den Merkmalen von einem oder mehreren der vorangegangenen Ansprüche,
bei dem das Profilband (1) mit einer Breite b mit 16mm≤b≤30mm ausgebildet ist.

8. Laufstreifenprofil gemäß den Merkmalen von einem oder mehreren der vorangegangenen Ansprüche,
bei dem der Abstand c mit a≤c≤(b-2mm) ausgebildet ist.

9. Laufstreifenprofil gemäß den Merkmalen von einem oder mehreren der vorangegangenen Ansprüche,
bei dem die Breite d₁ mit 1mm≤d₁ ausgebildet ist.

10. Laufstreifenprofil gemäß den Merkmalen von einem oder mehreren der vorangegangenen Ansprüche,
bei dem der Einschnitt (8) sich zu seinem von der Rille (7) wegweisenden Erstreckungsende hin unter - insbesondere stetig - abnehmender Breite d₁ verjüngt.

11. Laufstreifenprofil gemäß den Merkmalen von einem oder mehreren der vorangegangenen Ansprüche,
bei dem die in die in Umfangsrichtung U des Reifens hintereinander angeordneten Rillen (7) einmündenden Einschnitte (8) jeweils ausgehend von der jeweiligen Rille (7) in die gleiche Umfangsorientierung ausgerichtet erstrecken.

12. Laufstreifenprofil gemäß den Merkmalen von einem oder mehreren der vorangegangenen Ansprüche,
bei dem die Erstreckungslänge L des Einschnitts (8) mit (d₂ +2mm)≤L≤(3E) ausgebildet ist, wobei E den in Umfangsrichtung U gemessenen Abstand zwischen der Rille (7) und der in Erstreckungsrichtung des Einschnitts (8) zur Rille (7) hin benachbarten Rille (7) bildet, welcher in der radial äußeren Oberfläche (6) von der Einmündung der Rille (7) in die Umfangsrille (3) bis zur Einmündung der benachbarten Rille (7) in die Umfangsrille (3) gemessen wird.

13. Laufstreifenprofil gemäß den Merkmalen von einem oder mehreren der vorangegangenen Ansprüche,
bei dem die Rille (7) in Umfangsrichtung U zu beiden Seiten hin jeweils durch eine Rillenflanke (16,17) begrenzt wird, welche sich in radialer Richtung R aus dem Rillengrund (18) bis zur radial äußeren Oberfläche (6) erstreckt, wobei der Übergang zwischen derjenigen Rillenflanke (17), in welche der Einschnitt (8) in die Rille (7) mündet, zur radial äußeren Oberfläche als Fase (19) ausgebildet ist.

14. Laufstreifenprofil gemäß den Merkmalen von Anspruch 13,
wobei die Fase (19) im Übergang zum Einschnitt (8) in eine den Einschnitt (8) begrenzende Flanke (14) übergeht und in ihrer Verlängerung im Einschnitt (18) die zur Umfangsrille (3) hinweisende den Einschnitt (8) begrenzende Flanke (14) bildet.

15. Laufstreifenprofil gemäß den Merkmalen von einem oder mehreren der vorangegangenen Ansprüche,
wobei das Profilband (1) in einem zwischen den in den Schulterbereichen des Reifens ausgebildeten Schulterbändern ausgebildeten mittleren axialen Erstreckungsbereich des Reifens ausgebildet ist.

## Claims

1. Tread profile of a pneumatic vehicle tyre with profile strips (4, 1, 5), which are separated from one another by circumferential grooves (2, 3) and are delimited outwardly in the radial direction R by a radially outer surface (6) forming the ground contact surface, grooves (7) being formed in at least one profile strip (1) of the width b, measured in the axial direction A of the tyre, and made to extend - in particular in a straight line - from a circumferential groove (3), delimiting the profile strip (1), to a distance a, measured from the circumferential groove (3) in the axial direction A, with a < b, and end there, the grooves (7) respectively being formed along their extent with a measured width d₂ - in particular with 1 mm≤ d₂ ≤3 mm - and with a depth t₂ and the grooves (7) respectively being formed in their main direction of extent from the circumferential groove (3) up to the end of their extent with a greater directional component in the axial direction A than in the circumferential direction U,
**characterized**
**in that** the end of the extent of the groove (7) is respectively entered by a sipe (8), which is formed with a width d₁, with d₁ < d₂, and with a depth t₁, with t₁ < t₂, and is made to extend from the groove (7) over a length of extent L, measured in the circumferential direction U, and ends there in the profile strip (1) at a distance c from the circumferential groove (2, 3), measured in the axial direction A, with c < b, the sipe (8) being formed in its main direction of extent from the groove (7) up to the end of its extent with a greater directional component in the circumferential direction U than in the axial direction A.

2. Tread profile according to the features of Claim 1,
in which the groove (7) is formed with a depth t₂, measured in the radial direction R, with 4 mm ≤ t₂ ≤ P_{T}, where P_{T} is the maximum profile depth in the circumferential groove (3), measured in the radial direction R.

3. Tread profile according to the features of Claim 1 or 2,
in which the sipe (8) is formed along its extent with a depth t₁, measured in the radial direction R, where t₁ ≤ 2 mm.

4. Tread profile according to the features of one or more of the preceding claims,
the groove (7) forming with its main direction of extent an angle of inclination β with the circumferential direction U, with 82.5°≤ β ≤ 97.5°.

5. Tread profile according to the features of one or more of the preceding claims,
the sipe (8) forming with its main direction of extent an angle of inclination α with the circumferential direction U, with 0°≤ α ≤ 20°.

6. Tread profile according to the features of one or more of the preceding claims,
in which the distance a is formed with (b/3) ≤ a ≤ (b - 2 mm).

7. Tread profile according to the features of one or more of the preceding claims,
in which the profile strip (1) is formed with a width b, with 16 mm ≤ b ≤ 30 mm.

8. Tread profile according to the features of one or more of the preceding claims,
in which the distance c is formed with a ≤ c ≤ (b - 2 mm).

9. Tread profile according to the features of one or more of the preceding claims,
in which the width d₁ is formed with 1 mm ≤ d₁.

10. Tread profile according to the features of one or more of the preceding claims,
in which the sipe (8) tapers towards the end of its extent, directed away from the groove (7), with the width d₁ decreasing - in particular steadily.

11. Tread profile according to the features of one or more of the preceding claims,
in which the sipes (8) entering the grooves (7) arranged one behind the other in the circumferential direction U of the tyre are respectively made to extend from the respective groove (7) in such a way that they are aligned in the same circumferential orientation.

12. Tread profile according to the features of one or more of the preceding claims,
in which the length of extent L of the sipe (8) is formed with (d₂ + 2 mm) ≤ L ≤ (3E), where E is the distance, measured in the circumferential direction U, between the groove (7) and the adjacent groove (7) in the direction of extent of the sipe (8) towards the groove (7), which is measured in the radially outer surface (6) from the entry of the groove (7) into the circumferential groove (3) to the entry of the adjacent groove (7) into the circumferential groove (3).

13. Tread profile according to the features of one or more of the preceding claims,
in which the groove (7) is respectively delimited on both sides in the circumferential direction U by a groove flank (16, 17), which is made to extend in the radial direction R from the groove base (18) to the radially outer surface (6), the transition between that radial flank (17) at which the sipe (8) enters the groove (7) and the radially outer surface being formed as a bevel (19).

14. Tread profile according to the features of Claim 13,
the bevel (19) going over at the transition to the sipe (8) into a flank (14) delimiting the sipe (8) and in its extension in the sipe (18) forming the flank (14) that is directed towards the circumferential groove (3) and delimits the sipe (8).

15. Tread profile according to the features of one or more of the preceding claims,
the profile strip (1) being formed in the middle axial region of extent of the tyre that is formed between the shoulder strips formed in the shoulder regions of the tyre.

## Revendications

1. Profil de bande de roulement d'un pneumatique de véhicule, comprenant des bandes profilées (4, 1, 5) qui sont séparées les unes des autres par des rainures périphériques (2, 3) et qui sont limitées dans la direction radiale R vers l'extérieur par une surface radialement extérieure (6) formant la surface de contact avec la route, des rainures (7) étant réalisées dans au moins une bande profilée (1) de largeur b mesurée dans la direction axiale A, lesquelles rainures s'étendent - notamment en ligne droite - à partir d'une rainure périphérique (3) limitant la bande profilée (1) jusqu'à se terminer à une distance a mesurée depuis la rainure périphérique (3) dans la direction axiale A, avec a < b , les rainures (7) étant réalisées à chaque fois le long de leur étendue avec une largeur mesurée d₂ - notamment avec 1 mm ≤ d₂ ≤ 3 mm - et avec une profondeur t₂, et les rainures (7) étant réalisées à chaque fois à partir de la rainure périphérique (3) jusqu'à leur extrémité d'étendue dans leur direction d'étendue principale avec une plus grande composante directionnelle dans la direction axiale A que dans la direction périphérique U,
**caractérisé en ce que**
dans l'extrémité d'étendue de la rainure (7) débouche à chaque fois une entaille (8) qui est réalisée avec une largeur d₁, avec d₁ < d₂, et avec une profondeur t₁, avec t₁ < t₂, et qui s'étend à partir de la rainure (7) sur une longueur d'étendue L mesurée dans la direction périphérique U et s'y termine dans la bande profilée (1) à une distance c mesurée depuis la rainure périphérique (2, 3) dans la direction axiale A, avec c < b, l'entaille (8) étant réalisée à partir de la rainure (7) jusqu'à son extrémité d'étendue dans sa direction d'étendue principale avec une plus grande composante directionnelle dans la direction périphérique U que dans la direction axiale A.

2. Profil de bande de roulement selon les caractéristiques de la revendication 1,
dans lequel la rainure (7) est réalisée avec une profondeur t₂ mesurée dans la direction radiale R, avec 4 mm ≤ t₂ ≤ P_{T}, P_{T} étant la profondeur maximale du profil mesurée dans la manière périphérique dans la direction radiale R.

3. Profil de bande de roulement selon les caractéristiques de la revendication 1 ou 2,
dans lequel l'entaille (8) est réalisée le long de son étendue avec une profondeur t₁ mesurée dans la direction radiale R, avec t₁ ≤ 2 mm.

4. Profil de bande de roulement selon les caractéristiques de l'une ou de plusieurs des revendications précédentes,
dans lequel la rainure (7) forme avec sa direction d'étendue principale un angle d'inclinaison β avec la direction périphérique U, avec 82,4° ≤ β ≤ 97,5°.

5. Profil de bande de roulement selon les caractéristiques de l'une ou de plusieurs des revendications précédentes,
dans lequel l'entaille (8) forme avec sa direction d'étendue principale un angle d'inclinaison α avec la direction périphérique U, avec 0° ≤ α ≤ 20°.

6. Profil de bande de roulement selon les caractéristiques de l'une ou de plusieurs des revendications précédentes,
dans lequel la distance a est réalisé avec (b/3) ≤ a ≤ (b-2mm).

7. Profil de bande de roulement selon les caractéristiques de l'une ou de plusieurs des revendications précédentes,
dans lequel la bande profilée (1) est réalisée avec une largeur b, avec 16 mm ≤ b ≤ 30 mm.

8. Profil de bande de roulement selon les caractéristiques de l'une ou de plusieurs des revendications précédentes,
dans lequel la distance c est réalisée avec a ≤ c ≤ (b-2mm).

9. Profil de bande de roulement selon les caractéristiques de l'une ou de plusieurs des revendications précédentes,
dans lequel la largeur d₁ est réalisée avec 1 mm ≤ d₁.

10. Profil de bande de roulement selon les caractéristiques de l'une ou de plusieurs des revendications précédentes,
dans lequel l'entaille (8) se rétrécit jusqu'à son extrémité d'étendue opposée à la rainure (7) avec une largeur d₁ diminuant notamment de manière continue.

11. Profil de bande de roulement selon les caractéristiques de l'une ou de plusieurs des revendications précédentes,
dans lequel les entaille (8) débouchant dans les rainures (7) disposées les unes derrière les autres dans la direction périphérique U du pneumatique s'étendent à chaque fois de manière orientée dans la même orientation périphérique à partir de la rainure respective (7).

12. Profil de bande de roulement selon les caractéristiques de l'une ou de plusieurs des revendications précédentes,
dans lequel la longueur d'étendue L de l'entaille (8) est réalisée avec (d₂ + 2mm) ≤ L ≤ (3E), E formant la distance mesurée dans la direction périphérique U entre la rainure (7) et la rainure (7) adjacente dans la direction d'étendue de l'entaille (8) jusqu'à la rainure (7), laquelle distance est mesurée dans la surface radialement extérieure (6) depuis l'embouchure de la rainure (7) dans la rainure périphérique (3) jusqu'à l'embouchure de la rainure adjacente (7) dans la rainure périphérique (3).

13. Profil de bande de roulement selon les caractéristiques de l'une ou de plusieurs des revendications précédentes,
dans lequel la rainure (7) est limitée dans la direction périphérique U des deux côtés à chaque fois par un flanc de rainure (16, 17), qui s'étend dans la direction radiale R depuis le fond de rainure (18) jusqu'à la surface radialement extérieure (6), la transition entre le flanc de rainure (17) dans lequel l'entaille (8) débouche dans la rainure (7), à la surface radialement extérieure, étant réalisée sous forme de biseau (19).

14. Profil de bande de roulement selon les caractéristiques de la revendication 13,
dans lequel le biseau (19) se prolonge, dans la transition à l'entaille (8), par un flanc (14) limitant l'entaille (8), et dans son prolongement dans l'entaille (18), forme le flanc (14) limitant l'entaille (8) et tourné vers la rainure périphérique (3).

15. Profil de bande de roulement selon les caractéristiques de l'une ou de plusieurs des revendications précédentes,
dans lequel la bande profilée (1) est réalisée dans une région d'étendue axiale centrale du pneumatique réalisée entre les bandes d'épaulement réalisées dans les régions d'épaulement du pneumatique.
